(19) Europäisches Patentamt

European Patent Office

Office européen des brevets

(11) **EP 0 618 686 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.⁷: **H04B 7/005**

(21) Anmeldenummer: **94104292.1**

(22) Anmeldetag: **18.03.1994**

(54) **Entzerrung von durch Mehrwegeempfang degradierten DSSS Signalen**

Equalisation of DSSS signals degraded by multipath fading

Egalisation de signaux à spectre étalé dégradé par des évanouissements multivoie

(84) Benannte Vertragsstaaten:
**CH FR GB IT LI NL SE**

(30) Priorität: **02.04.1993 DE 4310852**

(43) Veröffentlichungstag der Anmeldung:
**05.10.1994 Patentblatt 1994/40**

(73) Patentinhaber: **ROBERT BOSCH GMBH**
**70442 Stuttgart (DE)**

(72) Erfinder: **Hagmanns, Franz Josef**
**D-71522 Backnang (DE)**

(56) Entgegenhaltungen:
**US-A- 4 694 467**

- **PROCEEDINGS OF THE IEEE, Bd.68, Nr.3, März 1980, NEW YORK US Seiten 328 - 353 TURIN 'Introduction to Spread-Spectrum Antimultipath Techniques and their Application to Urban Digital Radio'**
- **ANT NACHRICHTENTECHNISCHE BERICHTE, Nr.10, August 1993, BACKNANG DE Seiten 72 - 81, XP446110 HAGMANNS ET AL 'Direct-Sequence Spread-Spectrum-Übertragung für zellulare CDMA-Mobilfunksysteme'**

**Beschreibung**

Die vorteilhafte Anwendung des Direct-Sequence Spread-Spectrum (DS-SS) Verfahrens beim digitalen Mobilfunk ist von G.L. Turin, "Introduction to Spread-Spectrum Antimultipath Techniques and Their Application to Urban Digital Radio". Proceedings of the IEEE, vol 68, No.3, pp. 328-353, 1980 beschrieben worden.

Im Mobilfunk breitet sich das Sendesignal nicht nur auf einem (direkten) Weg vom Sender zum Empfänger aus, sondern bedingt durch Reflexionen an Geländehindernissen, auf vielen Umwegen mit unterschiedlichen Laufzeiten. Das Empfangssignal ist die Summe all dieser Umwegsignale. Geeignete Empfänger für DS-SS Signale sind unter gewissen Bedingungen in der Lage, diese Umwege voneinander aufzulösen und dann wieder so zu kombinieren, daß eine sichere Datenentscheidung möglich wird. Zu diesem Zweck muß der Empfänger mit geeigneten Synchronisationsschaltungen (z.B. Delay-Lock-Loop) die unterschiedlichen Laufzeiten der Umwegsignale bestimmen.

Der Erfindung liegt die Aufgabe zugrunde, ein Verfahren zum burstweisen Empfang von bandbegrenzten DS-SS Signalen anzugeben, das ohne aufwendige Synchronisationsschaltungen zur Bestimmung der unterschiedlichen Signallaufzeiten auskommt.

Erfindungsgemäß wird diese Aufgabe durch die Merkmale des Anspruchs 1 gelöst. Zweckmäßige Weiterbildungen der Erfindung gehen aus den Unteransprüchen hervor.

Nachfolgend wird ein auf der Erfindung basierendes Verfahren näher erläutert.

Fig. 1 zeigt ein Signalübertragungsmodell und

Fig. 2 zeigt ein Blockschaltbild, das die Erzeugung von Sendesignalen verdeutlicht.

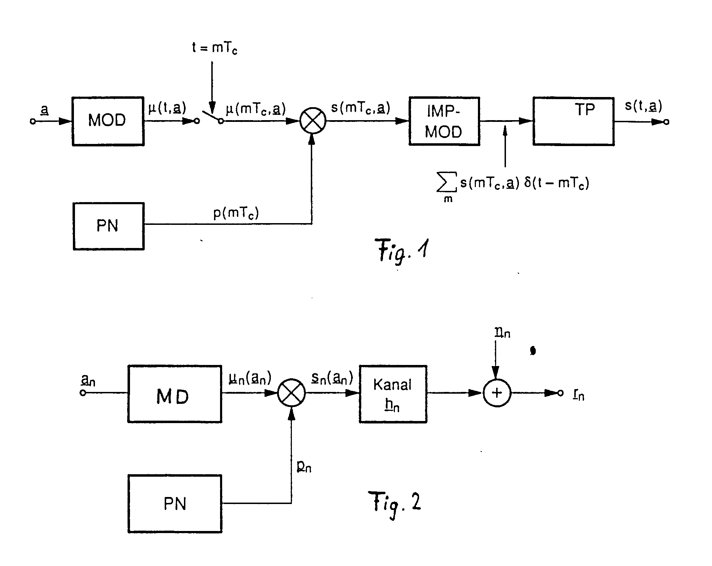

Wie dem in Fig. 1 dargestellten Signalübertragungsmodell zu entnehmen ist, ist $\underline{a}$ die zu übertragende Datenfolge und a(k) das k-te Element (Datenbit) dieser Folge. Es wird angenommen, daß der zeitliche Abstand zwischen zwei aufeinanderfolgenden Datenbits konstant gleich $T_b$ ist; die Bitrate ist somit $W_b = 1/T_b$. Das k-te Bit a(k) liegt also zur Zeit $kT_b$ vor. $\underline{a}$ wird durch den Modulator MOD in das Signal $\mu(t, \underline{a})$ abgebildet. Dieses wird mit der Rate $W_c = 1/T_c$ abgetastet, so daß eine Zahlenfolge mit den Elementen $\mu(mT_c, \underline{a})$ entsteht. Diese wird mit einer Pseudo-Zufallsfolge (PN-Folge) mit den Elementen $p(mT_c)$ multipliziert, so daß die Sendesignalabtastwerte

$$s(mT_c, \underline{a}) = \mu(mT_c, \underline{a}) p(mT_c)$$

entstehen. Je nach Anwendung nehmen die Elemente der PN-Folge die Werte {+1,-1} oder {+1,+j,-1,-j} an, wobei $j = \sqrt{-1}$ die imaginäre Einheit ist. PN-Folgen können durch geeignet rückgekoppelte Schieberegiester erzeugt werden.

Die Folge der $s(mT_c, \underline{a})$ wird auf einen sogenannten Impulsmodulator IMPMOD gegeben, der idealerweise das Signal

$$\sum_m s(mT_c, \underline{a})\delta(t - mT_c)$$

erzeugt. Dieses ist das Eingangssignal eines idealen Tiefpasses TP mit der Bandbreite $W_c$ (diese ist gleich der Taktfrequenz des oben beschriebenen Abtasters). Dessen Ausgangssignal

$$s(t) = \sum_m s(mT_c, \underline{a})\,\mathrm{si}\left(\pi\frac{t - mT_c}{T_c}\right)$$

ist schließlich das Sendesignal in Tiefpaßdarstellung. Das eigentliche Sendesignal ergibt sich durch Tief-Bandpaß-Transformation zu

$$s_B(t) = \mathrm{Re}\{s(t)e^{j2\pi f_0 t}\};$$

$f_o$ ist in diesem Fall die sogenannte Trägerfrequenz. Im folgenden wird zur Signalbeschreibung ausschließlich die Tiefpaßdarstellung verwendet. Impulsmodulator und idealer Tiefpaß sind idealisierte Annahmen zur Beschreibung des erfindungsgemäßen Verfahrens.

Die Bandbreite des Sendesignals ist unabhängig vom Modulationsverfahren und der Datenrate. Sie wird ausschließlich bestimmt durch die Rate, mit der das Modulationssignal abgetastet wird, die Statistik der PN-Folgenglieder und die Bandbreite des idealen Tiefpasses. Die Bandbreite des Sendesignales ist gleich der Abtastrate (und damit gleich der Bandbreite des idealen Tiefpasses) $W_c$. Das Verhältnis zwischen Signalbandbreite und Bitrate,

$$B = \frac{W_c}{W_b},$$

nennt man Spreizfaktor.

Bei der Übertragung über dem i-ten Umweg wird das Sendesignal um $\tau_i$ verzögert und mit $\rho_i$ gewichtet. Das Empfangssignal ist die Summe aller Umwegsignale; zusätzlich überlagert sich noch ein Störsignal $\eta(t)$.

Das Empfangssignal lautet also

$$r(t) = \sum_i \rho_i s(t - \tau_i, \underline{a}) + \eta(t).$$

Es wird angenommen, daß $\eta(t)$ eine Musterfunktion eines weißen gaußverteilten Prozesses mit der Leitungsdichte $N_o$ ist.

Wegen der Bandbegrenzung der Signale darf das Empfangssignal mit einem idealen Tiefpaß der Bandbreite $W_c = 1/T_c$ (der Grenzfrequenz $W_c/2$) gefiltert und anschließend mit der Rate $W_c$ abgetastet werden. Die Empfangssignalabtastwerte sind dann

$$r(mT_c) = \sum_i \frac{1}{T_c} \int_{-\infty}^{+\infty} \rho_i \, \mathrm{si}\left(\pi \frac{\tau}{T_c}\right) s(mT_c - \tau - \tau_i, \underline{a}) d\tau + \eta(mT_c),$$

wobei $\eta(mT_c)$ eine gaußverteilte, mittelwertfreie Zufallsvariable mit

$$E[\eta(mT_c)\eta^*(m'T_c)] = \sigma^2 \delta_{mm'},$$

(E: Erwartungswert
$\delta$: Kroneckersymbol)
und

$$\sigma^2 = N_0 W_c$$

ist, und

$$\sum_i \frac{1}{T_c} \int_{-\infty}^{+\infty} \rho_i \, \mathrm{si}\left(\pi \frac{\tau}{T_c}\right) s(mT_c - \tau - \tau_i, \underline{a}) d\tau$$

$$= \frac{1}{T_c} \sum_i \rho_i \int_{-\infty}^{+\infty} \mathrm{si}\left(\pi \frac{\tau - \tau_i}{T_c}\right) s(mT_c - \tau, \underline{a}) d\tau$$

$$= \sum_i \sum_l \rho_i \, \mathrm{si}\left(\pi \frac{lT_c - \tau_i}{T_c}\right) s(mT_c - lT_c, \underline{a}).$$

Die Ersetzung des Integrals durch eine Summe im letzten Schritt ist wegen der Bandbegrenzung von s(t, $\underline{a}$) möglich (Abtasttheorem). Mit der Abkürzung

$$h(lT_c) = \sum_i \rho_i \, \mathrm{si} \left( \pi \frac{lT_c - \tau_i}{T_c} \right)$$

erhält man

$$r(mT_c) = \sum_l h(lT_c)s(mT_c - lT_c, \underline{a}) \; + \; \eta(mT_c). \tag{1}$$

Die Summe auf der rechten Seite beschreibt eine zeitdiskrete Faltung, mit äquidistanten Signalabtastwerten, die Gesamtheit der h(l$T_c$) nennt man daher Kanalstoßantwort. Im folgenden soll die Zeitkonstante $T_c$ stets aus der Notation weggelassen werden; ferner sei angenommen, daß h(1) nur für l = O, , L - 1 (L: Zahl der Signalumwege) von 0 verschieden ist. Betrachtet wird also ein Übertragungssystem, das durch die Gleichung

$$r(m) = \sum_{l=0}^{L-1} h(l)s(m - l, \underline{a}) \; + \; \eta(m)$$

beschrieben werden kann.

Die Amplituden $\rho_i$ und die Laufzeit $\tau_i$ der einzelnen Umwegsignale sind zeitabhängig, falls sich Sender, Empfänger oder Reflexionshindernisse bewegen. In diesem Fall sind $\rho_i$ und $\tau_i$ als stochastische Prozesse zu beschreiben. Das gleiche gilt daher auch für die h(1); es wird angenommen, daß diese Kanalstoßantwortkoeffizienten Musterfunktionen von stationären mittelwertfreien gaußverteilten Prozessen sind (Rayleigh-Fading Kanal).

Der grundsätzliche Unterschied des hier beschriebenen Verfahrens zu den bisher bekannten Verfahren besteht darin, daß im Empfänger nicht versucht wird, durch Ermittlung der $\tau_i$ die einzelnen Umwegsignale voneinander zu trennen. Diese Trennung hat zwar auf der einen Seite den Vorteil, daß die als statistisch unabhängig voneinander angesehen werden können, was zu Vereinfachungen im Empfänger führt, auf der anderen Seite aber den Nachteil, daß gewisse Synchronisationsschaltungen zur Bestimmung der $\tau_i$ notwendig sind. Motiviert durch die Gl. (1) werden hier im Empfänger l$T_c$ (l = 0,···, L - 1) statt der möglichen Verzögerungszeiten $\tau_i$ und die Kanalstoßantwortkoeffizienten h(1) statt der Amplituden ₁ der dazugehörenden Umwegsignale betrachtet. Die Umweglaufzeiten sind daher per Definition bekannt, es sind daher keine Synchronisationsschaltungen wie beim Stand der Technik erforderlich. Nachteilig ist jedoch die jetzt vorhandene Korrelation der h(1).

Beispiel: Es sei nur ein Umwegsignal mit der Verzögerungszeit $\tau$ und der Amplitude $\rho$ vorhanden. $\rho$ sei eine Zufallsvariable mit der Varianz E [| $\rho$ |$^2$]. Ein Empfänger nach dem Stand der Technik würde versuchen, $\tau$ exakt zu bestimmen . Gelingt dies, dann sieht er auch nur dieses eine Umwegsignal. Der Empfänger des hier beschriebenen Verfahrens sieht die Kanalstoßantwort

$$h(l) = \rho \, \mathrm{si} \left( \pi \frac{lT_c - \tau}{T_c} \right) .$$

Ist nicht zufällig $\tau$ = l$T_c$ für irgendein 1, dann sieht der hier zu beschreibende Empfänger im Prinzip unendlich viele Umwegsignale (von denen aber in der Praxis nur einige wenige berücksichtigt werden müssen) mit den Korrelationseigenschaften

$$E[h(l)h^*(l')] = E[|\rho|^2]\,\text{si}\left(\pi\frac{lT_c - \tau}{T_c}\right)\text{si}\left(\pi\frac{l''T_c - \tau}{T_c}\right).$$

Die Stoßantwortkoeffizienten h(1) des Übertragungskanals sind also deutlich miteinander korreliert.

Bei dem hier zugrundeliegenden Empfangsverfahren, wird die Korrelation der Kanalstoßantwortkoeffizienten berücksichtigt. Dadurch werden die Synchronisationseinrichtungen der vorbekannten Verfahren überflüssig. Dies bedeutet jedoch nicht, daß das hier beschriebene Verfahren ohne Synchronisationseinrichtung auskommt. Der Empfänger wird synchronisiert, indem er auf die sich ständig ändernden Korrelationseigenschaften der Kanalstoßantwortkoeffizienten eingestellt wird.

Für die Erläuterung des Verfahrens sei angenommen, daß die Datenübertragung burstweise erfolgt. Die Sendesignale können dann mit der in Fig. 2 dargestellten Anordnung erzeugt werden.

$$\underline{a}_n = (a_n(0),...,a_n(K - 1))^T$$

sei der zu übertragende Datenvektor während des n-ten Bursts, bestehend aus K Datenbits. Dieser wird durch den Modulator MD in den M-stelligen Vektor

$$\underline{\mu}_n(\underline{a}_n) = (\mu_n(0,\underline{a}_n),...,\mu_n(M - 1,\underline{a}_n)^T$$

abgebildet. Der Modulator kann einfach als Tabelle realisiert werden, in der die $2^K$ möglichen Datenvektoren abgespeichert sind. Zur Notation: $\underline{\alpha}_n$ ist im folgenden der allgemeine Platzhalter für die Datenvektoren des n-ten Bursts, der i-ten mögliche Datenvektor wird mit $\underline{a}_n^{(i)}$, der tatsächlich gesendete mit $\underline{a}_n$ und der vom Empfänger als Detektionsergebnis entschiedene mit $\underline{\hat{a}}_n$ bezeichnet. Der ausgewählte Vektor wird komponentenweise mit einem Stück der PN-Folge

$$\underline{p}_n = (p_n(0),...,p_n(M - 1))$$

multipliziert ( die Periodenlänge der PN-Folge ist i.A. wesentlich größer als M, die Länge eines Bursts), das Resultat ist der Sendesignalvektor

$$\underline{s}_n(\underline{a}_n) = (s_n(0,\underline{a}_n),..., s_n(M - 1, \underline{a}_n))^T.$$

Der Spreizfaktor beträgt hier also

$$B = \frac{M}{K}.$$

Über das Modulationsverfahren (d.h. die Tabellensignale) sei zunächst nur ausgesagt, daß $\mu_n$ (m, $\underline{a}_n$) wie $p_n$ (m) nur Werte aus {+1,+j,-1,-j} annehmen kann, d.h. $|s_n(m,a_n)| = 1$.

Der Sendesignalvektor wird mit dem Kanalstoßantwortvektor

$$\underline{h}_n = (h_n(0),...,h_n(L - 1))^T$$

gefaltet und vom Rauschvektor

$$\underline{\eta}_n = (\eta_n(0),..., \eta_n(M - 1))^T$$

überlagert. Für den Empfangssignalvektor

$$\underline{r}_n = (r_n(0),...,r_n(M-1))^T$$

erhält man nun

$$\underline{r}_n = \underline{s}_n(\underline{a}_n) * \underline{h}_n + \underline{\eta}_n.$$

Der Empfangssignalvektor wurde als aus M Komponenten bestehend angenommen. Wegen der Faltung des Sendesignalvektors mit den Kanalstoßantwortvektor hat der Empfangssignalvektor genaugenommen M + L - 1 Komponenten. Im folgenden wird aber stets M>>L angenommen, Randeffekte können dann vernachlässigt werden.

Die Annahme der Burstübertragung macht nur dann einen Sinn, wenn gleichzeitig die Konstanz der Kanalstoßantwortkoeffizienten während eines Bursts angenommen werden kann. Jede kontinuierliche Übertragung kann durch willkürliche Partitionierung des Empfangssignales als Burstübertragung interpretiert werden. In diesem Sinne sollte hier die Annahme der Burstübertragung verstanden werden; das Verfahren verarbeitet das Empfangssignal abschnittsweise, wobei ein Abschnitt, wie gerade beschrieben und in Fig. 2 illustriert, definiert ist.

Die Kanalstoßantwortvektoren unterschiedlicher Bursts sind i.A. miteinander korreliert. Diese Korrelationen werden nicht berücksichtigt, wohl aber die Korrelationen der einzelnen Kanalstoßantwortkoeffizienten innerhalb eines Bursts. Diese lassen sich durch die Autokorrelationsmatrix

$$\underline{\Phi}_{hh} = E[\underline{h}_n \underline{h}_n^*]$$

beschreiben. Der hochgestellte * bedeutet i.A. konjugieren der bezeichneten Größe; in Verbindung mit Vektoren und Matrizen bedeutet er zusätzlich transponieren. Wegen der Annahme der Stationarität der Kanalstoßantwortkoeffizienten ist $\underline{\Phi}_{hh}$ unabhängig von n.

Den folgenden Ausführungen liegen stets die Normierungen

$$|s_n(m,\underline{\alpha}_n)| = 1, \qquad (2)$$

$$E[\underline{h}_n^* \underline{h}_n] = 1 \qquad (3)$$

zugrunde.

Die Varianz $\sigma^2$ der Komponenten des Rauschvektors ist dann $B(E_b/N_o)^{-1}$, wobei $E_b$ die Energie pro Bit des ungestörten Empfangssignals und $N_o$ die Rauschleistungsdichte ist.

Nun wird ein Verfahren hergeleitet, nach dem ein Empfänger arbeitet, der nach dem oben beschriebenen Übertragungsmodell erzeugte Signale empfängt. Als Ansatz dient das Maximum a posteriori Prinzip. Nach diesem Prinzip berechnet der Empfänger für alle möglichen Datenvektoren $\underline{\alpha}_n$ und dem vorliegenden Empfangsvektor $\underline{r}_n$ die Rückschlußwahrscheinlichkeiten $P(\underline{\alpha}_n|\underline{r}_n)$ und entscheidet sich für den Datenvektor $\underline{\alpha}_n = \underline{\hat{a}}_n$, für den diese maximal ist. Es ist

$$P(\underline{\alpha}_n|\underline{r}_n) = \int p(\underline{\alpha}_n, \underline{h}_n|\underline{r}_n)d\underline{h}_n = \frac{P(\underline{\alpha}_n)}{p(\underline{r}_n)} \int p(\underline{r}_n|\underline{\alpha}_n, \underline{h}_n)p(\underline{h}_n)d\underline{h}_n.$$

Nimmt man an, daß alle Datenvektoren mit der gleichen Wahrscheinlichkeit auftreten, dann ist die Maximierung von $P(\underline{\alpha}_n|\underline{r}_n)$ gleichbedeutend mit der Maximierung des Integrals auf der rechten Seite der obigen Gleichung. Es gilt

$$p(\underline{h}_n) \sim \exp(-\underline{h}_n^* \underline{\Phi}_{hh}^{-1} \underline{h}_n),$$

wobei $\underline{\Phi}_{hh}$ wie oben definiert, und

$$p(\underline{r}_n|\underline{\alpha}_n, \underline{h}_n) \sim \exp\left(-\frac{1}{\sigma^2}\sum_{m=0}^{M-1}\left|r_n(m) - \sum_{l=0}^{L-1} h_n(l)s_n(m-l, \underline{\alpha}_n)\right|^2\right)$$

ist. Der Exponent von $p(\underline{r}_n|\underline{\alpha}_n,\underline{h}_n)p(\underline{h})$ ist nun

$$-\frac{1}{\sigma^2}\sum_{m=0}^{M-1}\left|r_n(m) - \sum_{l=0}^{L-1} h_n(l)s_n(m-l, \underline{\alpha}_n)\right|^2 - \underline{h}_n^*\underline{\Phi}_{hh}^{-1}\underline{h}_n$$

$$= -\frac{1}{\sigma^2}\sum_{m=0}^{M-1}|r_n(m)|^2 + \frac{2}{\sigma^2}\mathrm{Re}\left\{\sum_{m=0}^{M-1} r_n(m)\sum_{l=0}^{L-1} h_n^*(l)s_n^*(m-l, \underline{\alpha}_n)\right\}$$

$$-\frac{1}{\sigma^2}\sum_{m=0}^{M-1}\left|\sum_{l=0}^{L-1} h_n(l)s_n(m-l, \underline{\alpha}_n)\right|^2 - \underline{h}_n^*\underline{\Phi}_{hh}^{-1}\underline{h}_n.$$

Mit (2) und der Annahme der Selbstorthogonalität der Sendesignale, d.h.

$$\frac{1}{M}\sum_{m=0}^{M-1} s_n(m-l, \underline{\alpha}_n)s_n^*(m-l', \underline{\alpha}_n) = \delta_{ll'}, \qquad 0 \le l,l' \le L-1, \tag{4}$$

folgt

$$\sum_{m=0}^{M-1}\left|\sum_{l=0}^{L-1} h_n(l)s_n(m-l, \underline{\alpha}_n)\right|^2 = \sum_{m=0}^{M-1}\sum_{l=0}^{L-1}\sum_{l'=0}^{L-1} h_n(l)h_n^*(l')s_n(m-l, \underline{\alpha}_n)s_n^*(m-l', \underline{\alpha}_n)$$

$$= \sum_{l=0}^{L-1}\sum_{l'=0}^{L-1} h_n(l)h_n^*(l')\underbrace{\sum_{m=0}^{M-1} s_n(m-l, \underline{\alpha}_n)s_n^*(m-l', \underline{\alpha}_n)}_{=M\delta_{ll'}}$$

$$= M\sum_{l=0}^{L-1}|h_n(l)|^2.$$

Die Annahme der Selbstorthogonalität wird weiter unter diskutiert. Aus dem Exponenten von $p(\underline{r}_n|\underline{\alpha}_n,\underline{h}_n)p(\underline{h}_n)$ wird jetzt

$$-\frac{1}{\sigma^2}\sum_{m=0}^{M-1}|r_n(m)|^2 + \frac{2}{\sigma^2}\mathrm{Re}\left\{\sum_{m=0}^{M-1} r_n(m)\sum_{l=0}^{L-1} h_n^*(l)s_n^*(m-l, \underline{\alpha}_n)\right\}$$

$$- \frac{M}{\sigma^2}\sum_{l=0}^{L-1}|h_n(l)|^2 - \underline{h}_n^*\underline{\Phi}_{hh}^{-1}\underline{h}_n.$$

Den ersten Summanden kann man weglassen, da er nicht von $\underline{\alpha}_n$ abhängt. Verwendet man zusätzlich die Abkürzungen

$$u_n(l, \underline{\alpha}_n) = \frac{1}{M} \sum_{m=0}^{M-1} r_n(m) s_n^*(m - l, \underline{\alpha}_n)$$

und

$$\underline{\Sigma}^{-1} = (\underline{E} + \sigma_c^2 \underline{\Phi}_{hh}^{-1}),$$

wobei

$$\sigma_c^2 = \sigma^2/M = (K E_b/N_0)^{-1}$$

und $\underline{E}$ die Einheitsmatrix ist, dann bleibt

$$\frac{2}{\sigma_c^2} \mathrm{Re} \left\{ \sum_{l=0}^{L-1} h_n^*(l) u_n(l, \underline{\alpha}_n) \right\} - \frac{1}{\sigma_c^2} \underline{h}_n^* \underline{\Sigma}^{-1} \underline{h}_n.$$

$$(5)$$

$U_n(1, \underline{\alpha}_n)$ ist einfach die Korrelation des hypothetischen Sendesignals $sn(m - 1, \underline{\alpha}_n)$ mit dem Empfangssignal $r_n(m)$, dividiert durch $M.\underline{\Sigma}^{-1}$ ist, genau wie $\underline{\Phi}_{hh}$, eine Autokorrelationsmatrix und damit hermite'sch und positiv definit. $\underline{\Sigma}^{-1}$ kann daher zerlegt werden in

$$\underline{\Sigma}^{-1} = \underline{T} \Lambda \underline{T}^*,$$

wobei eine Diagonalmatrix ist; die Diagonalwerte sind gerade gleich den Eingenwerten von $\underline{\Sigma}^{-1}$ bzw. den Kehrwerten der Eigenwerte von $\underline{\Sigma}$. Diese Eigenwerte von $\underline{\Sigma}$ sollen im folgenden mit $(1), 1 = 0,....,L - 1$ bezeichnet werden. $\underline{T}$ ist eine orthonormale Transformationsmatrix; die i-te Spalte von $\underline{T}$ ist der zum i-ten Eigenwert von $\underline{\Sigma}^{-1}$ gehörende normierte Eigenvektor. Setzt man nun

$$\underline{h}_n' = \underline{T}^* \underline{h}_n,$$

dann ist wegen der Orthonormalität von $\underline{T}$

$$\underline{h}_n = \underline{T} h_n'$$

und

$$\underline{h}_n^* = \underline{h}_n'^* \underline{T}^*.$$

Es folgt daher

$$\underline{h}_n^* \underline{\Sigma}^{-1} \underline{h}_n = \underline{h}_n'^* \underline{T}^* \underline{T} \Lambda \underline{T}^* \underline{T} h_n' = \underline{h}_n'^* \Lambda \underline{h}_n'.$$

Aus (5) wird damit

$$\frac{2}{\sigma_c^2} \operatorname{Re} \left\{ \sum_{l=0}^{L-1} h_n'^*(l) u_n'(l, \underline{\alpha}_n) \right\} - \frac{1}{\sigma_c^2} \sum_{l=0}^{L-1} \frac{|h_n'(l)|^2}{\gamma(l)}$$

Darin ist $\underline{u}_n(\underline{\alpha}_n) = \underline{T}^* \underline{u}_n(\underline{\alpha}_n)$. Zerlegung aller auftretenden Größen in Real- und Imaginärteil (Index I für Real-, Index Q für Imaginärteil) ergibt

$$\frac{1}{\sigma_c^2} \sum_{l=0}^{L-1} 2 h_{nI}'(l) u_{nI}'(l, \underline{\alpha}_n) - \frac{h_{nI}'^2}{\gamma(l)} + 2 h_{nQ}'(l) u_{nQ}'(l, \underline{\alpha}_n) - \frac{h_{nQ}'^2}{\gamma(l)}.$$

Nun ist

$$\int_{-\infty}^{+\infty} \exp\left( -\frac{h_{nI}'^2/\gamma(l) - 2 h_{nI}' u_{nI}'(l, \underline{\alpha}_n)}{\sigma_c^2} \right) dh_{nI}'$$

$$= \int_{-\infty}^{+\infty} \exp\left( -\frac{(h_{nI}' - \gamma(l) u_{nI}'(l, \underline{\alpha}_n))^2}{\gamma(l)\sigma_c^2} \right) \exp\left( \frac{\gamma(l) u_{nI}'^2(l, \underline{\alpha}_n)}{\sigma_c^2} \right) dh_{nI}'$$

$$\sim \exp\left( \frac{\gamma(l) u_{nI}'^2(l, \underline{\alpha}_n)}{\sigma_c^2} \right).$$

In gleicher Rechnung ergibt sich

$$\int_{-\infty}^{+\infty} \exp\left( -\frac{h_{nQ}'^2/\gamma(l) - 2 h_{nQ}' u_{nQ}'(l, \underline{\alpha}_n)}{\sigma_c^2} \right) dh_{nQ}' \sim \exp\left( \frac{\gamma(l) u_{nQ}'^2(l, \underline{\alpha}_n)}{\sigma_c^2} \right).$$

Das zu berechnende Integral ist daher ( bis auf eine Konstante) gleich

$$\exp\left( \frac{1}{\sigma_c^2} \sum_{l=0}^{L-1} \gamma(l) |u_n'(l, \underline{\alpha}_n)|^2 \right).$$

Auszuwählen ist daher der Datenvektor, für den

$$U_n(\underline{\alpha}_n) = \sum_{l=0}^{L-1} \gamma(l) |u_n'(l, \underline{\alpha}_n)|^2 = \underline{u}_n'^*(\underline{\alpha}_n) \underline{\Lambda}^{-1} \underline{u}_n'(\underline{\alpha}_n)$$

maximal wird. Macht man die Ersetzungen wieder rückgängig, dann folgt

$$U_n(\underline{\alpha}_n) = u_n'^*(\underline{\alpha}_n)\underline{\Lambda}^{-1}\underline{u}_n'(\underline{\alpha}_n) = \underline{u}_n^*(\underline{\alpha}_n)T\Lambda^{-1}\underline{T}^*\underline{u}_n(\underline{\alpha}_n) = \underline{u}_n^*(\underline{\alpha}_n)\underline{\Sigma}u_n(\underline{\alpha}_n).$$

Die Matrix

$$\underline{\Sigma} = (\underline{E} + \sigma_c^2\underline{\Phi}_{hh}^{-1})^{-1} = (\underline{\Phi}_{hh} + \sigma_c^2\underline{E})^{-1}\underline{\Phi}_{hh} \qquad (6)$$

wird im folgenden als Dekorrelationsmatrix bezeichnet.

Die geforderte Selbstorthogonalität der Sedesignal (siehe (4)) kann in der Praxis nicht exakt eingehalten werden. Verwendet man in dem oben spezifizierten Übertragungs System möglichst perfekte Zufallsfolgen (die einzelnen Folgeglieder sind statistisch unabhängig; ihre Werte treten mit der gleichen Wahrscheinlichkeit auf), dann ist

$$B(l, l') = \frac{1}{M}\sum_{m=0}^{M-1} s_n(m - l, \underline{\alpha_n})s_n^*(m - l', \underline{\alpha_n}) \qquad (7)$$

für l = l und für große M näherungsweise eine graußverteilte mittelwertfreie Zufallsvariable der Leistung 1/M, die sich den Korrelationswerten $u_n(l, \underline{\alpha}_n)$ überlagert. Diese Korrelationswerte enthalten aber, bedingt durch das Kanalrauschen, bereits einen Störterm der Varianz $\sigma_c^2$. Das Verhältnis beider Störterme ist somit

$$\frac{1/M}{\sigma_c^2} = \frac{1/M}{\sigma^2/M} = \frac{1}{\sigma^2} = \frac{E_b/N_0}{B}.$$

Für hinreichend große Spreizfaktoren (B>> $E_b/N_o$) ist dieses Verhältnis wesentlich kleiner als 1, d.h. die zusätzliche Störung bedingt durch die nichtperfekte Selbsthogonalität der Sendesignale kann gegenüber den Kanalstörungen vernachlässigt werden.

Statt der durch (6) definierten Dekorrelationsmatrix können auch andere Matrizen zur Berechnung der quadratischen Formen (der Entscheidungsvariablen) $U_n(\underline{\alpha}_n)$ verwendet werden.

Drei Beispiele sollen hier angegeben werden:

1. Von der optimalen Dekorrelationsmatrix werden nur die Haupt- und die sich daran anschließenden ersten beiden Nebendiagonalen verwendet (Tridiagonalapproximation der Dekkorrelationsmatrix). Diese Approximation entspringt der Überlegung, daß die Korrelationen $E[h_n(l)h_n^*(l')]$ für |1' - 1| > 1 verhältnismäßig klein und daher vernachlässigbar sind. Durch diese Approximation reduziert sich der Aufwand für die Berechnung der Entscheidungsvariablen drastisch.

2. Von der optimalen Dekkorrelationsmatrix wird nur der Zähler verwendet, d.h. $\underline{\Sigma} = \underline{\Phi}_{hh}$. Diese Approximation, welche in wichtigen Fällen keine Degradation der Empfangsqualität bedeutet, umgeht die Inversion der Matrix $(\underline{\Phi}_{hh} + \sigma_c^2\underline{E})$.

3. Von der Dekorrelationsmatrix aus 2. werden nur die Haupt- und die sich daran anschließenden ersten beiden Nebendiagonalen des Zählers verwendet.

Diese drei Approximationen führen i.A. zu einer von der Autokorrelationsmatrix $\underline{\Phi}_{hh}$ abhängigen Degradation der Empfangsqualität. Diese ist jedoch in den meisten Fällen so gering, daß diese Approximationen durchaus verwendbar sind.

Das zuvor hergeleitete Empfangsverfahren benötigt die Kenntnis der Autokorrelationsmatrix $\underline{\Phi}_{hh}$ sowie die Korrelator-Rauschvarianz $\sigma_c^2$. Hier soll ein Verfahren angegeben werden, da eine einfache Schätzung dieser Größen erlaubt. Voraussetzung für dieses Verfahren ist jedoch die Orthogonalität des Modulationsvektoren, d.h.

$$\frac{1}{M}\underline{\mu}^*(\underline{a}_n^{(i)})\underline{\mu}(\underline{a}_n^{(j)}) = \delta_{ij}.$$

**EP 0 618 686 B1**

**10**

Unter dieser Voraussetzung erweitert sich die Selbstorthogonalitätsbedingung (4) zu

$$\frac{1}{M} \sum_{m=0}^{M-1} s_n(m-l, \underline{a}_n^{(i)}) s_n^*(m-l', \underline{a}_n^{(j)}) = \delta_{ij} \delta_{ll'}, \qquad 0 \le l, l' \le L-1.$$

Arbeitet der Sender nach dem oben beschriebenen Modell, dann ist diese Beziehung exakt nur für 1 = 1 erfüllt. Für 1 = 1 erhält man wieder eine wie durch (7) beschriebene Zufallsvariable, deren Einfluß jedoch für hinreichend große Spreizfaktoren vernachlässigt werden kann.

Unter diesen Voraussetzungen ist für den tatsächlich gesendeten Datenvektor an

$$u_n(l, \underline{a}_n) = h_n(l) + \eta_n(l, \underline{a}_n), \qquad l = 0,..., L-1$$

und für alle anderen Datenvektoren $\underline{\alpha}_n \neq \underline{a}_n$

$$u_n(l, \underline{\alpha}_n) = \eta_n(l, \underline{\alpha}_n), \; l = 0,..., L-1.$$

Darin ist

$$E[\eta_n(l, \underline{a}_n^{(i)}) \eta_n^*(l', \underline{a}_n^{(j)})] = \sigma_c^2 \delta_{ij} \delta_{ll'},$$

Es folgt daher

$$\sigma_c^2 = \frac{1}{L(2^K - 1)} \sum_{\underline{a}_n^{(i)} \neq \underline{a}_n} \sum_{l=0}^{L-1} E[|u_n(l, \underline{a}_n^{(i)})|^2] \qquad (8)$$

sowie

$$\underline{\Phi}_{hh} = E[\underline{u}_n(\underline{a}_n) \underline{u}_n^*(\underline{a}_n)] - \sigma_c^2 \underline{E}. \qquad (9)$$

Für ein praktisches Verfahren können die Erwartungswerte durch Zeitmittelwerte ersetzt werden. Zu diesem Zweck werden in jedem Burst

$$\underline{\Phi}_{uu,n}(\underline{\hat{a}}_n) = \underline{u}_n(\underline{\hat{a}}_n) \underline{u}_n^*(\underline{\hat{a}}_n) \qquad (10)$$

sowie

$$\psi_{uu,n} = \frac{1}{L(2^K - 1)} \sum_{\underline{a}_n^{(i)} \neq \underline{\hat{a}}_n} \sum_{l=0}^{L-1} |u_n(l, \underline{a}_n^{(i)})|^2 \qquad (11)$$

berechnet. Die Ergebnisse werden über eine bestimmte Anzahl N aufeinanderfolgender Bursts gemittelt.

In der Realität kennt der Empfänger den gesendeten Datenvektor $\underline{a}_n$ natürlich nicht. in den Gleichungen (8) bis (11) ist daher für eine praktische Realisierung $\underline{a}_n$ durch $\underline{\hat{a}}_n$ zu ersetzen.

Als Schätzwerte für $\underline{\Phi}_{hh}$ und $\sigma^2_c$ werden folgende Zeitmittelwerte verwendet:

$$\frac{1}{N} \sum_{n=n_0}^{n_0+N-1} \psi_{uu,n} \qquad \text{(Schätzwert für } \sigma^2{}_c\text{)}$$

$$\frac{1}{N} \sum_{n=n_0}^{n_0+N-1} \underline{\Phi}_{uu,n}(\underline{\hat{a}}_n) - \frac{\underline{E}}{N} \sum_{n=n_0}^{n_0+N-1} \psi_{uu,n} \qquad \text{(Schätzwert für } \underline{\Phi}_{hh}\text{)}.$$

**Patentansprüche**

1. Verfahren zum burstweisen Empfang von bandbegrenzten Direct-Sequence Spead-Spectrum (DS-SS) Signalen, dadurch gekennzeichnet,

   daß das Empfangssignal mit einem Tiefpaß gefiltert wird, dessen Bandbreite $W_c$ der des DS-SS Sendesignals entspricht,

   daß das gefilterte Empfangssignal mit der Rate $W_c$ abgetastet wird,

   daß jedem durch die Abtastung entstandenen Empfangssignalburst ein M- stelliger Empfangsvektor

   $$\underline{r}_n = \underline{s}_n (\underline{a}_n)^* \underline{h}_n + \eta_n \qquad \text{(n: Burstnummer)}$$

   zugeordnet wird, der sich aus einem mit einem L- stelligen Kanalstoßantwortvektor $\underline{h}_n$ gefalteten M- stelligen Sendesignalvektor $\underline{s}_n (\underline{a}_n)$ und einem M- stelligen Rauschvektor $\eta_n$ zusammensetzt, wobei M die Burstlänge und M>> L ist,

   daß für jeden möglichen Sendedatenvektor $\underline{\alpha}_n$ ein L- stelliger Korrelationsvektor $\underline{u}_n (\underline{\alpha}_n)$ mit den Komponenten:

   $$u_n(l, \underline{\alpha}_n) = \frac{1}{M} \sum_{m=0}^{M-1} r_n(m) s_n^*(m - l, \underline{\alpha}_n), \qquad l = 0, \ldots, L-1$$

   gebildet wird,

   daß für jeden möglichen Sendedatenvektor $\underline{\alpha}_n$ eine Entscheidungsvariable

   $$U_n (\underline{\alpha}_n) = \underline{u}_n^* (\underline{\alpha}_n) \; \Sigma \; \underline{u}_n (\underline{\alpha}_n)$$

   abgeleitet wird, wobei $\underline{\Sigma}$ aus der Autokorrelationsmatrix

   $$\underline{\Phi}_{hh} = E [\underline{h}_n \; \underline{h}_n^*]$$

   gebildet wird,

und daß für denjenigen $\underline{\hat{a}}_n$ aller möglichen Sendedatenvektoren $\underline{\alpha}_n$ entschieden wird, für den die Entscheidungsvariable $U_n (\underline{\alpha}_n)$ maximal ist.

2. Verfahren nach Anspruch 1, dadurch gekennzeichnet, daß die für die Bildung der Entscheidungsvariablen $U_n (\underline{\alpha}_n)$ verwendete Matrix

$$\underline{\underline{\Sigma}} = (\underline{\underline{\Phi}}_{hh} + \sigma_c^2 \underline{\underline{E}})^{-1} \underline{\underline{\Phi}}_{hh}$$

mit

$$\sigma_c^2 = (K E_b / N_0)^{-1},$$

($E_b$: Energie pro Bit, $N_o$: Rauschleistungsdichte)
und dem Einheitsvektor $\underline{E}$ herangezogen wird.

3. Verfahren nach Anspruch 1, dadurch gekennzeichnet, daß die für die Bildung der Entscheidungsvariablen $U_n (\underline{\alpha}_n)$ verwendete Matrix $\underline{\underline{\Sigma}}$ aus der Haupt- und den Nebendiagonalen der Matrix

$$(\underline{\underline{\Phi}}_{hh} + \sigma_c^2 \underline{\underline{E}})^{-1} \underline{\underline{\Phi}}_{hh}$$

besteht, wobei

$$\sigma_c^2 = (K E_b / N_0)^{-1}$$

($E_b$: Energie pro Bit, $N_o$: Rauschleistungsdichte)
und $\underline{\underline{E}}$ der Einheitsvektor ist.

4. Verfahren nach Anspruch 1, dadurch gekennzeichnet, daß die für die Bildung der Entscheidungsvariablen $U_n (\underline{\alpha}_n)$ verwendete Autokorrelationsmatrix

$$\underline{\underline{\Sigma}} = \underline{\underline{\Phi}}_{hh} \text{ ist.}$$

5. Verfahren nach Anspruch 1, dadurch gekennzeichnet, daß die für die Bildung der Entscheidungsvariablen $U_n (\underline{\alpha}_n)$ verwendete Matrix $\underline{\underline{\Sigma}}$ aus der Haupt- und den Nebendiagonalen der Autokorrelationsmatrix $\underline{\underline{\Phi}}_{hh}$ besteht.

6. Verfahren nach einem der vorhergehenden Ansprüche, dadurch gekennzeichnet,

daß für jeden Empfangssignalburst

$$\underline{\underline{\Phi}}_{uu,n}(\underline{\hat{a}}_n) = \underline{u}_n(\underline{\hat{a}}_n) \underline{u}_n^*(\underline{\hat{a}}_n)$$

sowie

$$\psi_{uu,n} = \frac{1}{L(2^K - 1)} \sum_{\underline{a}_n^{(i)} \neq \underline{\hat{a}}_n} \sum_{l=0}^{L-1} |u_n(l, \underline{a}_n^{(i)})|^2$$

ermittelt werden,
daß der Zeitmittelwert

$$\frac{1}{N} \sum_{n=n_0}^{n_0+N-1} \psi_{uu,n}$$

als Schätzwert für $\sigma_c^2$ und
daß der Zeitmittelwert

$$\frac{1}{N} \sum_{n=n_0}^{n_0+N-1} \underline{\Phi}_{uu,n}(\underline{\hat{a}}_n) - \frac{E}{N} \cdot \sum_{n=n_0}^{n_0+N-1} \psi_{uu,n}$$

( N: Zahl der Bursts, über die gemittelt wird)
als Schätzwert für $\underline{\Phi}_{hh}$ verwendet wird.

**Claims**

1. Method for the burst-mode reception of band-limited direct-sequence spread-spectrum (DS-SS) signals, characterised

   in that the received signal is filtered using a lowpass filter whose bandwidth $W_c$ corresponds to that of the DS-SS transmitted signal,
   in that the filtered received signal is sampled at the rate $W_c$,
   in that an M-dimensional reception vector

   $$\underline{r}_n = \underline{s}_n(a_n) * \underline{h}_n + \underline{\eta}_n \text{ (n: burst number)}$$

   which is composed of an M-dimensional transmitted-signal vector $\underline{s}_n(a_n)$ convolved with an L-dimensional channel impulse-response vector $\underline{h}_n$ and of an M-dimensional noise vector $\underline{\eta}_n$, where M is the burst length and M » L, is assigned to each received-signal burst resulting from the sampling,
   in that an L-dimensional correlation vector $\underline{u}_n(\underline{\alpha}_n)$ with the components:

   $$u_n(l, \underline{\alpha}_n) = \frac{1}{M} \sum_{m=0}^{M-1} r_n(m) s_n^*(m - l, \underline{\alpha}_n), \qquad l = 0, \ldots, L-1$$

   is formed for each possible transmitted-data vector $\underline{\alpha}_n$, in that a decision variable

   $$U_n(\underline{\alpha}_n) = \underline{u}_n^*(\underline{\alpha}_n) \underline{\Sigma} \, \underline{u}_n(\underline{\alpha}_n)$$

   is derived for each possible transmitted-data vector $\underline{\alpha}_n$, where $\underline{\Sigma}$ is formed from the autocorrelation matrix

   $$\underline{\Phi}_{hh} = E[\underline{h}_n \underline{h}_n^*],$$

   and in that a decision is made in favour of the one $\underline{\hat{a}}_n$ out of all the possible transmitted-data vectors $\underline{\alpha}_n$ for which the decision variable $U_n(\underline{\alpha}_n)$ is a maximum.

2. Method according to Claim 1, characterised in that the matrix

$$\underline{\Sigma} = (\underline{\Phi}_{hh} + \sigma_c^2 \underline{E})^{-1} \underline{\Phi}_{hh}$$

with

$$\sigma_c^2 = (K\, E_b/N_0)^{-1},$$

($E_b$: energy per bit,
$N_o$: noise power density)
and with the unit vector $\underline{E}$, which is the matrix used for the formation of the decision variables $U_n(\underline{\alpha}_n)$, is employed.

3. Method according to Claim 1, characterised in that the matrix $\underline{\Sigma}$ which is used for the formation of the decision variables $U_n(\underline{\alpha}_n)$ consists of the leading and the adjacent diagonals of the matrix

$$(\underline{\Phi}_{hh} + \sigma_c^2 \underline{E})^{-1} \underline{\Phi}_{hh}$$

where

$$\sigma_c^2 = (K\, E_b/N_0)^{-1}$$

($E_b$: energy per bit, $N_o$: noise power density)
and $\underline{E}$ being the unit vector.

4. Method according to Claim 1, characterised in that the autocorrelation matrix which is used for the formation of the decision variables $U_n(\underline{\alpha}_n)$ is

$$\underline{\Sigma} = \underline{\Phi}_{hh}.$$

5. Method according to Claim 1, characterised in that the matrix $\underline{\Sigma}$ which is used for the formation of the decision variables $U_n(\underline{\alpha}_n)$ consists of the leading and the adjacent diagonals of the autocorrelation matrix $\underline{\Phi}_{hh}$.

6. Method according to one of the preceding claims, characterised in that

$$\underline{\Phi}_{uu,n}(\hat{\underline{a}}_n) = \underline{u}_n(\hat{\underline{a}}_n)\underline{u}_n^*(\hat{\underline{a}}_n)$$

and

$$\psi_{uu,n} = \frac{1}{L(2^K - 1)} \sum_{\underline{a}_n^{(i)} \neq \hat{\underline{a}}_n} \sum_{l=0}^{L-1} |u_n(l, \underline{a}_n^{(i)})|^2$$

are calculated for each received-signal burst,

in that the time-average value

$$\frac{1}{N} \sum_{n=n_0}^{n_0+N-1} \psi_{uu,n}$$

is used as an estimate for $\sigma^2{}_c$, and
in that the time-average value

$$\frac{1}{N} \sum_{n=n_0}^{n_0+N-1} \Phi_{uu,n}(\hat{\underline{a}}_n) - \frac{E}{N} \cdot \sum_{n=n_0}^{n_0+N-1} \psi_{uu,n}$$

(N: number of bursts over which averaging is carried out)
is used as an estimate for $\underline{\Phi}_{hh}$.


## Revendications

1. Procédé de réception par rafales de signaux à étalement direct (DS-SS) et bande limitée, caractérisé en ce que

le signal de réception est filtré par un filtre passe-bas dont la largeur de bande $W_c$ correspond à celle des signaux DS-SS d'émission,
le signal de réception filtré est échantillonné à la fréquence $W_c$,
à chaque rafale de signaux de réception créée par l'échantillonnage, un vecteur de réception à M positions

$$\underline{r}_n = \underline{s}_n(\underline{a}_n)^*\underline{h}_n + \eta_n \text{ (n : numéro de rafale)}$$

est affecté qui se compose d'un vecteur de réponse impulsionnelle de canal $\underline{h}_n$ à L positions, d'un vecteur de signaux d'émission convoluté $\underline{s}_n(\underline{a}_n)$ à M positions et d'un vecteur de bruit $\underline{\eta}_n$ à M positions, M étant la longueur de rafale et M>>L,
pour chaque vecteur de données d'émission $\underline{\alpha}_n$ possible, un vecteur de corrélation $\underline{u}_n(\underline{\alpha}_n)$ à L positions avec les composantes :

$$u_n(l, \underline{\alpha}_n) = \frac{1}{M} \sum_{m=0}^{M-1} \underline{r}_n(m)s_n^*(m-l, \underline{\alpha}_n), \quad l = 0, \dots, L-1$$

est formé,
pour chaque vecteur de données d'émission $\underline{\alpha}_n$, une variable de décision

$$U_n(\underline{\alpha}_n) = \underline{u}_n^*(\underline{\alpha}_n) \underline{\Sigma} \underline{u}_n(\underline{\alpha}_n)$$

est dérivée, $\underline{\Sigma}$ étant formé à partir de la matrice d'auto-corrélation

$$\underline{\Phi}_{hh} = E[\underline{h}_n \underline{h}_n^*],$$

et en ce que la décision est prise pour celui $\hat{\underline{a}}_n$ de tous les vecteurs de données d'émission $\underline{\alpha}_n$ possibles pour lequel la variable de décision $U_n(\underline{\alpha}_n)$ est maximale.

2. Procédé selon la revendication 1, caractérisé en ce que l'on fait appel à la matrice

$$\underline{\underline{\Sigma}} = (\underline{\underline{\Phi}}_{hh} + \sigma_c^2 \underline{\underline{E}})^{-1} \underline{\underline{\Phi}}_{hh}),$$

utilisée pour la création de la variable de décision $U_n (\underline{\alpha}_n)$ avec

$$\sigma_c^2 = (KE_b / N_0)^{-1}$$

($E_b$ : énergie par bit, $N_o$ : densité de puissance de bruit) et le vecteur unité $\underline{E}$.

3. Procédé selon la revendication 1, caractérisé en ce que la matrice $\underline{\underline{\Sigma}}$ utilisée pour la création de la variable de décision $U_n (\underline{\alpha}_n)$ se compose de la diagonale principale et des diagonales secondaires de la matrice

$$(\underline{\underline{\Phi}}_{hh} + \sigma_c^2 \underline{\underline{E}})^{-1} \underline{\underline{\Phi}}_{hh}$$

où

$$\sigma_c^2 = (KE_b / N_0)^{-1}$$

($E_b$ : énergie par bit, $N_o$ : densité de puissance de bruit)
et $\underline{E}$ le vecteur unité.

4. Procédé selon la revendication 1, caractérisé en ce que la matrice d'auto-corrélation utilisée pour la création de la variable de décision $U_n (\underline{\alpha}_n)$ est

$$\underline{\underline{\Sigma}} = \underline{\underline{\Phi}}_{hh}.$$

5. Procédé selon la revendication 1, caractérisé en ce que la matrice $\underline{\underline{\Sigma}}$ utilisée pour la création de la variable de décision $U_n (\underline{\alpha}_n)$ se compose de la diagonale principale et des diagonales secondaires de la matrice d'auto-corrélation $\underline{\underline{\Phi}}_{hh}$.

6. Procédé selon l'une quelconque des revendications précédentes, caractérisé en ce que pour chaque rafale de signaux de réception

$$\underline{\underline{\Phi}}_{uu,n} (\underline{\hat{a}}_n) = \underline{u}_n (\underline{\hat{a}}_n) \underline{u}_n^* (\underline{\hat{a}}_n)$$

ainsi que

$$\Psi_{uu,n} = \frac{1}{L(2^K - 1)} \sum_{\underline{a}_n^{(i)} \neq \underline{\hat{a}}_n} \sum_{l=0}^{L-1} \left| u_n \left(1, \underline{a}_n^{(i)}\right)\right|^2$$

sont déterminés,

la moyenne de temps

$$\frac{1}{N} \sum_{n=n_0}^{n_0+N-1} \Psi_{uu,n}$$

est utilisée comme valeur estimée pour $\sigma_c^2$ et
la moyenne de temps

$$\frac{1}{N} \sum_{n=n_0}^{n_0+N-1} \underline{\Phi}_{uu,n}(\hat{\underline{a}}_n) - \frac{E}{N} \sum_{n=n_0}^{n_0+N-1} \underline{\Psi}_{uu,n}$$

(N : nombre de rafales utilisées pour la moyenne)
est utilisée comme valeur estimée pour $\underline{\Phi}_{hh}$.

Fig. 1

Fig. 2